(19) Europäisches Patentamt
European Patent Office
Office européen des brevets

(11) EP 2 030 782 A1

(12) **EUROPÄISCHE PATENTANMELDUNG**

(43) Veröffentlichungstag:
**04.03.2009 Patentblatt 2009/10**

(51) Int Cl.:
***B32B 27/28*** *(2006.01)* *B32B 27/08* *(2006.01)*
*B32B 27/36* *(2006.01)* *B65D 77/20* *(2006.01)*

(21) Anmeldenummer: **08015292.9**

(22) Anmeldetag: **29.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **03.09.2007 DE 102007041706**

(71) Anmelder: **Mitsubishi Polyester Film GmbH
65203 Wiesbaden (DE)**

(72) Erfinder:
- **Konrad, Matthias, Dr.
65719 Hofheim (DE)**
- **Peiffer, Herbert, Prof. Dr.
55126 Mainz (DE)**
- **Hilkert, Gottfried, Dr.
55291 Saulheim (DE)**

(74) Vertreter: **Schweitzer, Klaus et al
Plate Schweitzer Zounek
Patentanwälte
Rheingaustrasse 196
65203 Wiesbaden (DE)**

(54) **Coextrudierte, heisssiegelbare und peelfaehige Polyesterfolie**

(57) Die Erfindung betrifft eine coextrudierte, peelfähige und biaxial orientierte Polyesterfolie mit einer Basisschicht (B) und mindestens einer auf dieser Basisschicht (B) aufgebrachten Deckschicht (A). Die Deckschicht (A) ist heißsiegelbar und zeichnet sich durch Peelbarkeit zu apolaren Substraten wie PS und PP aus. Die heißsiegelbare und peelfähige Deckschicht (A) enthält ein Copolymer aus Ethylen und einem Acrylsäureester. Die Erfindung betrifft weiterhin ein Verfahren zur Herstellung der Folie und ihre Verwendung.

EP 2 030 782 A1

## Beschreibung

Die Erfindung betrifft eine coextrudierte, peelfähige und biaxial orientierte Polyesterfolie mit einer Basisschicht (B) und mindestens einer auf dieser Basisschicht (B) aufgebrachten Deckschicht (A). Die Deckschicht (A) ist heißsiegelbar und zeichnet sich durch eine Peelbarkeit zu apolaren Substraten wie PS und PP aus. Die heißsiegelbare und peelfähige Deckschicht (A) enthält ein Copolymer aus Ethylen und einem Acrylsäureester. Die Erfindung betrifft weiterhin ein Verfahren zur Herstellung der Folie und ihre Verwendung.

In der Lebensmittelindustrie werden in großem Umfang Verpackungen mit abziehbaren Deckeln verwendet. Die Deckel sollen das Füllgut sowohl vor mechanischen Beschädigungen und Schmutz schützen als auch eine Barriere für Gase wie Sauerstoff und Wasserdampf darstellen. Zudem müssen die Deckel für den Verbraucher leicht zu öffnen, d. h. abziehbar, peelfähig sein. Die Deckel tragen dazu eine Schicht, die heißsiegelbar und peelfähig ist.

Die heißsiegelbare und peelfähige Schicht wird nach dem Stand der Technik in der Regel mittels so genannter Off-line-Methoden (d. h. in einem zusätzlichen, der Folienherstellung nachgeordneten Prozessschritt) auf die Polyesterfolie aufgebracht. Bei dieser Methode wird zunächst eine "Standardpolyesterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie appliziert. In einem nachgeschaltetem Trockenofen wird das Lösungsmittel verdunstet, und das peelfähige Polymer bleibt als feste Schicht auf der Folie zurück.

Solch ein Off-line-Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte heißsiegelbare und peelfähige Polyesterfolien angeboten. Die Polyesterfolien unterscheiden sich im Aufbau und in der Zusammensetzung der Deckschicht (A).

Einige Folien und Laminate, die gegen Substrate wie PS und PP siegeln, sind bereits bekannt.

In der DE-A-101 28 711 wird eine coextrudierte siegelfähige Polyolefinfolie beschrieben mit einer Deckschicht, die mindestens 70 Gew.-% eines Co- oder Terpolymeren enthält, welches aus Olefin und ungesättigter Carbonsäure oder deren Estern oder deren Anhydrid aufgebaut ist. Die Haftung dieser Folie gegenüber PP, PE, PET, PS, PVC, PC, Glas, Weißblech und Aluminium wird als gut beschrieben. Die Nachteile von Polyolefinfolie gegenüber einer PET-Folie sind vor allem die schlechtere Barriere gegen Sauerstoff, die niedrigere Temperaturbeständigkeit und die schlechteren mechanischen Eigenschaften. So ist z. B. ein Siegeln von solchen Folien bei industriell üblichen Temperaturen von 160 °C und mehr nicht möglich.

Die US 4,333,968 beschreibt eine Polypropylenfolie, die nach der Orientierung in Längsrichtung mit Ethylenvinylacetat-Copolymer (EVA) extrusionsbeschichtet wird und anschließend querverstreckt wird. Zusätzlich zu den oben genannten Nachteilen von Polyolefinfolie kommt hier die niedrige Temperaturbeständigkeit des EVAs hinzu, so dass Folienverschnitt nicht regeneriert und wiedereingesetzt werden kann.

In der WO 03/033258 wird ein siegel- und peelfähiges Deckelfolienlaminat beschrieben. Das Laminat ist aufgebaut aus drei Schichten, einer Schicht aus fasrigem Material (z. B. Papier), einer polymeren Sauerstoffbarriereschicht (PET, EVOH und/oder Polyamid) und einer Siegelschicht. Die letzten beiden Schichten sind z. B. coextrudiert und werden auf die erste auflaminiert. Die Siegelschicht besteht aus einer Kombination von Ethylenmethylacrylat-Copolymer (EMA), EVA und Polyamid-Wachs. Die Siegelschicht hat ein Flächengewicht von 5 bis 30 $g/m^2$ und siegelt gegen PE, PP und PS. Das Laminat wird verwendet als Deckel in der Lebensmittelverpackung z. B. für Milchprodukte. Die Nachteile dieses Laminats sind neben der aufwändigen Herstellung die gegenüber PET-Folie schlechtere Optik (Glanz) der Papieroberfläche und die schlechtere Bedruckbarkeit. Außerdem ist das Laminat als solches nicht rezyklierbar.

Die WO 06/055656 betrifft eine siegelfähige Folie oder ein Laminat mit einer siegelfähigen Folie, wobei die siegelfähige Schicht mit einem Antifog-Agens ausgestattet ist.

Die siegelfähige Schicht der Folie enthält oder besteht aus einem Ethylen-Copolymeren oder einem modifizierten Ethylen-Copolymeren oder beiden. Das Ethylen-Copolymer ist ein Copolymer, ein Terpolymer oder ein Tetrapolymer, das Wiederholungseinheiten enthält, die aus Ethylen abgeleitet sind und das 5 bis 50 Gew.-% von einem oder mehreren polaren Monomeren enthält, die ausgewählt sind aus der Gruppe, bestehend aus Vinylalkanoaten, Acrylsäure, $\alpha$-Alkylacrylsäure, Acrylsäurealkylester (= Acrylat) und $\alpha$-Alkylacrylat. Die Gewichtsprozente beziehen sich auf die Gesamtmenge des Ethylen-Copolymeren oder des modifizierten Ethylen-Copolymeren in der siegelfähigen Schicht.

Die siegelfähige Schicht, die die siegelfähige Schicht enthaltende Folie bzw. die weiteren Schichten können nach mehreren, nicht näher spezifizierten Verfahren gefertigt werden, z. B. über die Herstellung von Blasfolie, in-line oder off-line mittels diverser Beschichtungsverfahren oder mittels Coextrusion. Als weitere Schichten werden solche genannt, die aus Nylon, Polypropylen, Polyethylen, Ionomeren, Polyethylenvinylacetat, Polyethylenterephthalat, Polystyrol, Polyethylenvinylalkohol, Polyvinylidenchlorid oder Kombinationen von zwei oder mehrerer dieser Materialien hergestellt werden.

In den Beispielen werden Laminate (63,5 μm dick) angegeben, die durch Kleber-Kaschierung (nicht durch Coextrusion) aus zwei unterschiedlichen Folientypen hergestellt werden. Als Trägerfolie wird eine 12 μm dicke PET-Folie und als Siegelfolie eine Blasfolie bestehend aus 3 Schichten verwendet. Die Schichten bestehen aus HDPE, HDPE+LDPE und aus modifiziertem EVA oder EMA in der Siegelschicht. Das Laminat zeichnet sich durch hohe Herstellungskosten aus, zudem ist es nicht regenerierbar und damit nicht umweltverträglich. Außerdem sind die mechanischen (die Folie curlt), thermischen und optischen (Trübung, Glanz) Eigenschaften der Folie/des Laminates verbesserungswürdig (enthält trübes HDPE).

Die EP-A-1 471 096, EP-A-1 471 097, EP-A-1 475 228, EP-A-1 475 229, EP-A-1 471 094 und EP-A-1 471 098 beschreiben heißsiegelbare und gegenüber A/CPET peelfähige Polyesterfolien mit ABC-Aufbau, die zur Einstellung der gewünschten Peeleigenschaften in der peelfähigen und heißsiegelbaren Deckschicht A amorphe aromatische und aliphatische Copolyester und entweder ca. 2 bis 10 Gew.-% anorganische oder organische Partikel oder aber ein polyesterunverträgliches Polymer wie z. B. Norbornen/Ethylen enthalten. Die Folien zeichnen sich durch gute Peeleigenschaften gegen polare Substrate wie PET oder PVC aus, gegenüber PS und PP sind sie jedoch nicht siegelfähig.

Aufgabe der vorliegenden Erfindung war es, eine coextrudierte, heißsiegelbare und peelfähige, biaxial orientierte Polyesterfolie zur Verfügung zu stellen, die sich durch hervorragende Peeleigenschaften gegenüber apolaren Substraten wie PS oder PP auszeichnet. Sie soll die Nachteile der Folien nach dem Stand der Technik nicht mehr aufweisen und sich insbesondere durch folgende Eigenschaftskombinationen auszeichnen:

- Sie soll gegenüber PS und PP peelen, d. h. die Peelkraft (Siegelnahtfestigkeit) soll größer/gleich 1 N je 15 mm, bevorzugt größer/gleich 1,5 N je 15 mm und besonders bevorzugt größer/gleich 2 N je 15 mm Folienstreifenbreite sein (bezogen auf eine 30 μm dicke Folie).
- Die peelfähige Schicht soll gegenüber PS und PP heißsiegelbar sein, d. h. eine Mindestsiegeltemperatur von kleiner/gleich 150 °C, bevorzugt kleiner/gleich 140 °C, insbesondere kleiner/gleich 130 °C aufweisen (bezogen auf eine 30 μm dicke Folie).
- Die Folie soll sich wirtschaftlich herstellen lassen. Dies bedeutet beispielsweise, dass zur Herstellung der Folie in der Industrie übliche Streckverfahren eingesetzt werden können. Weiterhin soll die Folie bei heute üblichen Maschinengeschwindigkeiten von bis zu 500 m/min herstellbar und zudem regenierbar (rezyklierbar) sein.
- Des Weiteren soll eine gute Haftung (größer als 2 N/15 mm Folienbreite) zwischen den einzelnen Schichten der Folie ohne Applikation eines zusätzlichen Klebers für deren praktische Anwendung gewährleistet sein.

Unter heißsiegelbar wird hier die Eigenschaft einer coextrudierten Polyesterfolie verstanden, die zumindest eine Deckschicht (= heißsiegelbare Deckschicht (A)) enthält, die mittels Siegelbacken durch Anwendung von Wärme (130 bis 220 °C) und Druck (2 bis 5 bar) in einer bestimmten Zeit (0,2 bis 2 s) mit sich selbst (Fin-Siegelung) bzw. mit einem Substrat aus thermoplastischem Kunststoff (hier insbesondere PS und PP) verbunden werden kann, ohne dass dabei die Trägerschicht (= Basisschicht (B)) selbst plastisch wird.

Unter peelfähig wird hier die Eigenschaft einer coextrudierten Polyesterfolie verstanden, die zumindest eine Deckschicht (= heißsiegelbare und peelfähige Deckschicht (A)) enthält, die nach der Heißsiegelung auf ein Substrat (hier im Wesentlichen PS und PP) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf.

Gelöst wird die Aufgabe durch die Bereitstellung einer coextrudierten, biaxial orientierten Polyesterfolie, enthaltend eine Basisschicht (B) und eine heißsiegelbare und gegenüber PS und PP peelfähige Deckschicht (A), wobei die heißsiegelbare und peelfähige Deckschicht (A) überwiegend aus einer Zusammensetzung aus

30 bis 100 Gew.-% Ethylen-Acrylsäureester-Copolymer und
0 bis 70 Gew.-% Polyester

besteht, wobei das Ethylen-Acrylsäureester-Copolymer 10-40 Mol-% Acrylsäureester enthält.

Bei der Angabe der Molprozente in Polymeren bzw. Copolymeren beziehen sich diese - sofern nichts anderes gesagt ist - auf die von den genannten Monomeren abgeleiteten Einheiten im Polymeren bzw. Copolymeren. Gleiches gilt für die Beschreibung des strukturellen Aufbaus der Polymere bzw. Copolymere selbst.

Die heißsiegelbare und peelfähige Deckschicht (A) zeichnet sich durch charakteristische Merkmale aus. Sie

besitzt eine Siegelanspringtemperatur (= Mindestsiegeltemperatur) gegenüber PS und PP von nicht mehr als 150 °C, bevorzugt nicht mehr als 140 °C und besonders bevorzugt nicht mehr als 130 °C, und eine Siegelnahtfestigkeit gegenüber PS und PP von mindestens 1 N, bevorzugt mindestens 1,5 N, besonders bevorzugt mindestens 2 N (immer bezogen auf 15 mm Folienbreite und eine 30 μm dicke Folie). Die heißsiegelbare und peelfähige Deckschicht (A) hat im Allgemeinen gegenüber PS und PP eine max. Siegeltemperatur von 220 °C, wobei im gesamten Siegelbereich (Mindestsiegeltemperatur bis maximale Siegeltemperatur) eine gegenüber PS und PP peelfähige Folie erhalten wird.

Die Folie nach der vorliegenden Erfindung enthält eine Basisschicht (B) und mindestens eine erfindungsgemäße Deckschicht (A). In diesem Fall ist die Folie zweischichtig aufgebaut. In einer bevorzugten Ausführungsform ist die Folie drei- oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C). Bei einer vierschichtigen Ausführungsform enthält die Folie eine Zwischenschicht (D) zwischen der Basisschicht (B) und der Deckschicht (A) oder (C).

Die Basisschicht der Folie besteht zu mindestens 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Vorteilhaft ist es weiterhin, wenn in der Basisschicht (B) ein Polyester-Copolymer auf Basis von Terephthalat und geringen Mengen (< 3 Mol-%) Isophthalat oder auf Basis von Terephthalat und geringen Mengen (< 3 Mol-%) Naphthalat verwendet wird. In diesem Fall sind die Herstellbarkeit der Folie und die optischen Eigenschaften der Folie besonders gut. Die Basisschicht (B) enthält dann im Wesentlichen ein Polyestercopolymeres, das überwiegend aus Terephthalsäure- und Isophthalsäure-Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid, Titanoxide oder Ester sowie Germanium- und Aluminium-Verbindungen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie nach der vorliegenden Erfindung ist zumindest zweischichtig aufgebaut. Sie besteht dann aus der Basisschicht (B) und der auf dieser durch Coextrusion aufgebrachten erfindungsgemäßen siegelbaren und peelfähigen Deckschicht (A).

Die durch Coextrusion auf die Basisschicht (B) aufgebrachte siegelbare und peelfähige Deckschicht (A) ist zu mindestens 30 Gew.-%, bevorzugt zu mindestens 40 Gew.-% und besonders bevorzugt zu mindestens 50 Gew.-%, aus einem Ethylen-Acrylsäureester-Copolymer aufgebaut, wobei das Ethylen-Acrylsäureester-Copolymer 10 bis 40 Mol-% Acrylsäureester enthält.

Unter "Acrylsäureester" wird erfindungsgemäß eine Monomereinheit verstanden, die aus einem Ethylen-Baustein und einer oder mehreren daran anhängenden polaren Gruppe/n besteht. Das Copolymer ist dann aus "reinen" von Ethylen abgeleiteten Einheiten und Acrylsäureester abgeleiteten Einheiten aufgebaut, entsprechend der Formel

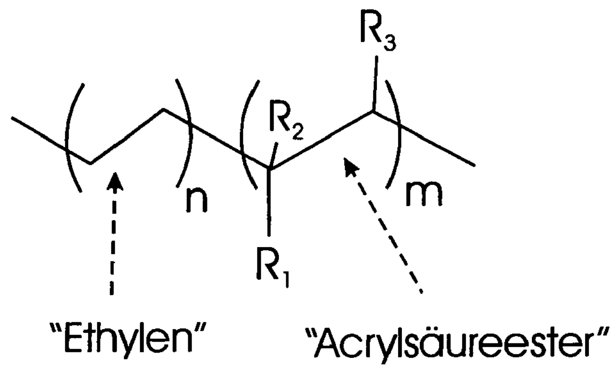


wobei

$R_1$ $C_1$-$C_3$-alkoxycarbonyl oder
-CO-$OR_4$ bedeutet, wobei
$R_4$ Wasserstoff, lineares oder verzweigtes $C_1$-$C_{18}$-Alkyl, welches seinerseits ggf. mit OH oder Phenyl ein-, zwei-, drei- oder mehrfach substituiert ist, $C_5$-$C_{12}$-cycloalkyl, welches ggf. mit einer $C_1$-$C_3$-Brücke überbrückt ist und/oder mit niedrig-Alkyl ein-, zwei- oder mehrfach substituiert ist, Phenyl oder
-($CH_2$-$CH_2$-O)$_q$-$R_5$ bedeutet, wobei
$R_5$ Wasserstoff, $C_1$-$C_{24}$-Alkyl oder Phenyl bedeutet, wobei das Phenyl seinerseits mit $C_1$-$C_{12}$-Alkyl ein-, zwei- oder mehrfach substituiert sein kann, und
$R_2$ und $R_3$ Wasserstoff oder niedrig-Alkyl bedeuten.

Bevorzugt sind Copolymere, worin

$R_1$ Methoxycarbonyl oder
-CO-$OR_4$ bedeutet, wobei
$R_4$ Wasserstoff, lineares oder verzweigtes $C_1$-$C_{18}$-Alkyl, welches seinerseits ggf. mit OH oder mit Phenyl einfach oder mit OH dreifach substituiert ist,
$C_5$-$C_6$-cydoalkyl, welches ggf. mit einer $C_1$-Brücke überbrückt ist und/oder mit niedrig-Alkyl substituiert ist, Phenyl oder
-($CH_2$-$CH_2$-O)$_q$-$R_5$ bedeutet, wobei
$R_5$ Wasserstoff, Methyl, $C_{22}$-Alkyl oder Phenyl bedeutet, wobei das Phenyl seinerseits mit $C_7$-$C_9$-Alkyl substituiert sein kann, und
$R_2$ Wasserstoff oder Methyl bedeuten.

"Niedrig-Alkyl" steht für einen Methyl-, Ethyl-, Propyl-, i-Propyl-, Butyl-, i-Butyl- oder tert.-Butyl-Rest.
Der Anteil der Acrylsäureester-basierenden Wiederholungseinheiten im Ethylen-Acrylsäureester-Copolymer beträgt 12 bis 50 Mol-%, bevorzugt 14 bis 45 Mol-% und besonders bevorzugt 16 bis 40 Mol-%.

Beispiele für solche polaren "Acrylsäure"-Monomere sind:

Vinylacetat, Acrylsäure, Methacrylsäure, Ethylacrylat, Ethylmethacrylat, Methylacrylat, Methylmethacrylat, Propylacrylat, Propylmethacrylat, Iso-Propylacrylat, Iso-Propylmethacrylat, N-Butylacrylat, N-Butlymethacrylat, Iso-Butylacrylat, Iso-Butlymethacrylat, Tert-Butylacrylat, Tert-Butylmethacrylat, N-Hexylacrylat, N-Hexylmethacrylat, N-Octylacrylat, N-Octylmethacrylat, 2-Octylacrylat, 2-Octylmethacrylat, Undecylacrylat, Undecylmethacrylat, Octadecylacrylat, Octadecylmethacrylat, Dodecylacrylat, Dodecylmethacrylat, 2-Ethylhexylacrylat, 2-Ethylhexylmethacrylat, Isobornylacrylat, Isobornylmethacrylat, Cyclohexylacrylat, Cyclohexylmethacrylat, Benzylacrylat, Benzylmethacrylat, Phenylacrylat, Phenylmethacrylat, 2-Hydroxyethylacrylat, 2-Hydroxyethylmethacrylat, Glycidylacrylat, Glycidylmethacrylat, Poly(ethylenglykol)acrylat, Poly(ethylenglykol)methacrylat, Poly(ethylenglykol)methyl-ether-acrylat, Poly(ethylenglykol) methyl-ether-methacrylat, Poly(ethylenglykol)behenyl-ether-acrylat, Poly(ethylenglykol)behenyl-ether-methacrylat, Poly(ethylenglykol)-4-nonylphenyl-ether-acrylat, Poly(ethylenglykol)-4-nonylphenylethermethacrylat, Poly(ethylenglykol)-phenyl-ether-acrylat, Poly(ethylenglykol)-phenylether-methacrylat, wobei solche bevorzugt sind, die Vinylacetat, Acrylsäure, Methacrylsäure, Alkyl(meth)acrylat oder Kombinationen von zwei oder mehreren davon enthalten.

Die erfindungsgemäß verwendeten Ethylen-Acrylsäure-Copolymere sind entweder als solche kommerziell erhältlich oder lassen sich - durch dem Fachmann geläufige Verfahren - leicht herstellen, beispielsweise durch Verfahren wie sie in der WO 06/055656 beschrieben sind.

Die siegelbare und peelfähige Deckschicht (A) kann neben dem Ethylen-Acrylsäureester-Copolymeren bis zu 70 Gew.-%, bevorzugt bis zu 60 Gew.-% und besonders bevorzugt bis zu 50 Gew.-% Polyester enthalten. Die Untergrenze für den Polyester liegt zweckmäßigerweise bei größer/gleich 0 Gew.-%, bevorzugt größer/gleich 2 Gew.-% und besonders bevorzugt größer/gleich 4 Gew.-%.

Für den Polyester in der Siegel-/Peelschicht kann im Allgemeinen der gleiche Polyesterrohstoff ausgewählt werden wie er bereits für die Basis beschrieben wurde. In diesem Fall wird der Polyester üblicherweise ausgewählt aus der Gruppe PET, Polyethylenisophthalat (IPA) und Mischungen davon.

Als besonders vorteilhaft hat es sich dabei erwiesen, wenn ein Polyester auf Basis von im Wesentlichen Copolyestern verwendet wird, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind.

Durch die Zugabe von Polyester zu der siegelbaren und peelfähigen Deckschicht (A) wird die Herstellbarkeit der Folie verbessert, d. h. zum Beispiel die Klebeneigung der Folie auf metallischen Walzen verringert und die Haftung der Deckschicht (A) zur Basisschicht (B) verbessert.

Die Deckschicht (A) besteht überwiegend aus den beschriebenen polymeren Rohstoffen. "Überwiegend" bedeutet, dass sie zu mindest 90 Gew.-% aus diesen Rohstoffen besteht. Bis zu 10 Gew.-% an Additiven können in dieser Schicht vorhanden sein.

Optional enthält die heißsiegelbare und peelfähige Deckschicht (A) zusätzlich als Additiv anorganische und/oder organische Partikel (auch als "Pigmente" oder "Antiblockmittel" bezeichnet) in einer Konzentration von 0 bis 10 Gew.-%, bezogen auf die Masse der Deckschicht (A). In einer bevorzugten Ausführungsform enthält die Deckschicht (A) anorganische und/oder organische Partikel in einer Konzentration von 0,1 bis 9 Gew.-%, bezogen auf die Masse der Deckschicht (A). In einer besonders bevorzugten Ausführungsform enthält die Deckschicht (A) anorganische und/oder organische Partikel in einer Konzentration von 0,5 bis 8 Gew.-%, bezogen auf die Masse der Deckschicht (A).

Übliche Partikel sind beispielsweise Calciumcarbonat-, amorphe Kieselsäure-, Talk-, Magnesiumcarbonat-, Bariumcarbonat-, Calciumsulfat-, Bariumsulfat-, Lithiumphosphat-, Calciumphosphat-, Magnesiumphosphat-, Aluminiumoxid-, Lithiumfluorid-, Calcium-, Barium-, Zink- oder Mangan-Salze der eingesetzten Dicarbonsäuren, Titandioxid-, Kaolin- oder vernetzte Polystyrol- oder Arcrylat-Partikel. Die Partikel können der Schicht in den jeweils vorteilhaften Konzentrationen, z. B. als glykolische Dispersion während der Polykondensation oder über Masterbatche bei der Extrusion zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung wenig geeignet. Geeignete Partikel können z. B. über die Firmen Grace, Fuji, Degussa oder Ineos bezogen werden. Die Teilchen haben allgemein einen mittleren Partikeldurchmesser $d_{50}$ von 2,0 bis 15 $\mu$m.

Um weiterhin das Verarbeitungsverhalten der Folie nach der vorliegenden Erfindung zu verbessern, ist es von Vorteil, bei einem zweischichtigen Folienaufbau (AB) in die Basisschicht (B) bzw. bei einem dreischichtigen Folienaufbau (ABC) in die Deckschicht (C) ebenfalls Partikel einzuarbeiten.

Bei der zweischichtigen und der besonders vorteilhaften dreischichtigen Ausführungsform der erfindungsgemäßen Folie liegt die Dicke der Deckschicht (A) im Bereich von 1 und 20 $\mu$m, bevorzugt im Bereich von 2 und 18 $\mu$m und besonders bevorzugt im Bereich von 3 und 15 $\mu$m. Beträgt die Dicke der Deckschicht (A) dagegen weniger als 1 $\mu$m, so ist die Folie nicht mehr heißsiegelbar.

Die Dicke der anderen Deckschicht (C) kann gleich der Dicke der Deckschicht (A) oder von dieser verschieden sein; ihre Dicke liegt im Allgemeinen zwischen 1 und 20 $\mu$m.

Die Gesamtdicke der erfindungsgemäßen Polyesterfolie kann innerhalb bestimmter Grenzen variieren. Sie beträgt 10 bis 200 $\mu$m, insbesondere 15 bis 150 $\mu$m, vorzugsweise 20 bis 100 $\mu$m, wobei die Schicht (B) einen Anteil von vorzugsweise 45 bis 97 % an der Gesamtdicke hat.

In einer bevorzugten Ausführung enthält die Basisschicht (B) zumindest ein weißfärbendes Pigment in einer Konzentration von 3 bis 20 %, vorzugsweise 4 bis 18 %. Die Konzentration wird dabei erfindungsgemäß so gewählt, dass der Weißgrad der Folie (nach Berger) größer als 70 ist. Im anderen Fall ist die Folie für die gedachten Anwendungen

(z. B. gesiegelte Deckelfolie auf Becher) bezüglich der optischen Eigenschaften weniger geeignet, da sie zu durchscheinend ist.

Zur Erzielung der vorgenannten Eigenschaften, insbesondere des gewünschten Weißgrades der Folie, werden in die Basisschicht (B) und in die Deckschicht (C) die notwendigen Pigmente eingearbeitet. In Frage kommen z. B. Titandioxid, Calciumcarbonat, Bariumsulfat, Zinksulfid oder Zinkoxid. In bevorzugter Weise wird $TiO_2$ als alleiniges einfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente ein brillantes weißes Aussehen. Um zu dem gewünschten Weißgrad (> 70) und zu der gewünschten niedrigen Transparenz (< 50 %) zu gelangen, sollte die Basisschicht (B) hochgefüllt sein. Die Partikelkonzentration zur Erzielung der gewünschten niedrigen Transparenz liegt bei größer/gleich 3 Gew.-%, jedoch kleiner/gleich 20 Gew.-%, vorzugsweise über 4 Gew.-%, jedoch unterhalb 18 Gew.-%, bezogen auf das Gesamtgewicht der Basisschicht (B).

Zu einer weiteren Steigerung des Weißgrades können geeignete optische Aufheller der Basisschicht und/oder den anderen Schichten zugesetzt werden. Geeignete optische Aufheller sind beispielsweise Hostalux® KS (Firma: Clariant, DE) oder Eastobrite® OB-1 (Firma: Eastman, USA).

Es wurde gefunden, dass bei der bevorzugten Verwendung von im Wesentlichen $TiO_2$ als einfärbendem Pigment die Folie weniger anfällig gegenüber Einreißen und Delaminierung wird. Die Zugabe des $TiO_2$ bevorzugt über die Masterbatchtechnologie hat den Vorteil, dass Farbunterschiede z. B. durch nicht konstante Regenerateigenschaften relativ leicht korrigiert werden können. Bei Verwendung von $TiO_2$ als alleinigem Pigment wird die Folie besonders glatt und damit glänzender, neigt aber eventuell zum Verblocken.

Die Basisschicht und die anderen Schichten können zusätzlich übliche Additive wie Stabilisatoren (UV, Hydrolyse), flammhemmende Stoffe oder Füllmaterialien, enthalten. Sie werden zweckmäßig dem Polymer bzw. der Polymermischung bereits vor dem Aufschmelzen zugesetzt.

Die Erfindung betrifft auch ein Verfahren zur Herstellung der erfindungsgemäßen Polyesterfolie nach dem an sich aus der Literatur ("Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988") bekannten Extrusionsverfahren.

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Zunächst werden, wie beim Extrusionsverfahren üblich, die Polymere bzw. die Polymermischungen für die einzelnen Schichten der Folie jeweils in einem Extruder komprimiert und verflüssigt, wobei die gegebenenfalls als Zusätze vorgesehenen Additive bereits im Polymer bzw. in der Polymermischung enthalten sein können. Die Schmelzen werden dann zusammengeführt und gleichzeitig durch eine Flachdüse (Breitschlitzdüse) gepresst. Die ausgepresste Schmelze wird auf einer oder mehreren gekühlten Abzugswalzen abgezogen, wobei die Schmelze abkühlt und sich zu einer mehrschichtigen Vorfolie verfestigt.

Die biaxiale Streckung wird im Allgemeinen sequenziell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 60 bis 130 °C (Aufheiztemperaturen 60 bis 130 °C, Strecktemperaturen 60 bis 130 °C) und die Querstreckung in einem Temperaturbereich von 90 °C (Beginn der Streckung) bis 140 °C (Ende der Streckung) durchgeführt. Das Längsstreckverhältnis liegt allgemein im Bereich von 2,0:1 bis 5:1, bevorzugt von 2,5:1 bis 4,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung kann die der siegelfähigen Seite gegenüberliegende Seite der Folie nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische

Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Der Glanz der Folienoberfläche (B) im Falle einer zweischichtigen Folie bzw. der Glanz der Folienoberfläche (C) bei einer dreischichtigen Folie ist größer als 40. In einer bevorzugten Ausführungsform beträgt der Glanz dieser Seiten mehr als 50 und in einer besonders bevorzugten Ausführungsform mehr als 60 (gemessen nach DIN 67530 in Anlehnung an ASTM-D 523-78 und ISO 2813 mit Einstrahlwinkel 20°). Diese Folienoberflächen eignen sich daher insbesondere für eine weitere funktionelle Beschichtung, für die Bedruckung oder für die Metallisierung.

Die erfindungsgemäße Folie eignet sich hervorragend zum Verpacken von Nahrungs- und Genussmitteln, insbesondere zur Verpackung von Milchprodukten in Bechern, bei denen peelfähige Polyesterfolien zum Öffnen der Verpackung verwendet werden.

Die nachstehende Tabelle (Tabelle 1) fasst die wichtigsten erfindungsgemäßen Folieneigenschaften noch einmal zusammen:

**Tabelle 1**

| **Deckschicht (A)** | Bevorzugter Bereich | Besonders bevorzugt | Ganz besonders bevorzugt | Einheit | Messmethode |
|---|---|---|---|---|---|
| Anteil Ethylen-Acrylsäureester-Copolymer | | 40 bis 98 | 50 bis 96 | Gew.-% | |
| Anteil Polyester | 0 bis 70 | 2 bis 60 | 4 bis 50 | Gew.-% | |
| Anteil Acrylsäureester im Copolymer | 10 bis 40 | 15 bis 35 | 20 bis 30 | Mol-% | |
| Dicke $d_A$ der Deckschicht (A) | 1 bis 20 | 2 bis 18 | 3 bis 15 | µm | |
| **Eigenschaften** | | | | | |
| Dicke der Folie | 10 bis 200 | 15 bis 150 | 20 bis 100 | | |
| Mindestsiegeltemperatur von DS (A) gegen PS und PP (für eine 30µm dicke Folie) | 150 | 140 | 130 | °C | intern |
| Siegelnahtfestigkeit von DS (A) gegen PS und PP (für eine 30um dicke Folie) | ≥ 1,0 | ≥ 1,5 | ≥ 2,0 | N/15 mm | intern |
| DS: Deckschicht | | | | | |

Zur Charakterisierung der Rohstoffe und der Folien wurden im Rahmen der vorliegenden Erfindung die folgenden Messmethoden benutzt:

**Messung des mittleren Durchmessers $d_{50}$**

Die Bestimmung des mittleren Durchmessers $d_{50}$ des Antiblockmittels wird mittels Laser auf einem Malvern Master Sizer mittels Laserscannung durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert (auch Median genannt).

### SV-Wert

Der SV-Wert des Polymers wird durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1)*1000.$$

### Siegelnahtfestigkeit

Zur Bestimmung der Siegelnahtfestigkeit wird ein Folienstreifen (100 mm lang x 15 mm breit) auf ein entsprechendes Substrat (PS o. PP) gelegt und bei der eingestellten Temperatur von ≥ 130 °C, einer Siegelzeit von 0,5 s und einem Siegeldruck von 3 bar (Siegelgerät HSG/ET der Firma Brugger, beidseitig beheizte Siegelbacke) gesiegelt. Die gesiegelten Streifen werden unter einem Winkel von 180° auseinandergezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm).

### Bestimmung der Mindestsiegeltemperatur

Mit dem Siegelgerät HSG/ET der Firma Brugger werden wie zuvor bei der Messung der Siegelnahtfestigkeit beschrieben heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180°-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

### Trübung

Die Trübung nach Hölz wird nach ASTM-D 1003-52 bestimmt.

Glanz

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

### Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO® der Firma Zeiss, Oberkochem (DE), Normlichtart C, 2°-Normalbeobachter. Der Weißgrad wird als

$$WG = RY + 3RZ - 3RX\ 15$$

definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

### Schmelzindex

Der Schmelzindex wird nach DIN 537354 gemessen

Im Folgenden wird die Erfindung anhand von Beispielen näher erläutert.

**Beispiel 1**

Chips aus Polyethylenterephthalat wurden dem Extruder für die Basisschicht (B) zugeführt. Ebenfalls wurden Chips aus Polyethylenterephthalat und Partikel dem Extruder (Zweischneckenextruder) für die Deckschicht (C) zugeführt. Entsprechend den in unten stehender Tabelle aufgeführten Verfahrensbedingungen wurden die Rohstoffe in den beiden jeweiligen Extrudern aufgeschmolzen und homogenisiert.

Daneben wurde einem Zweischneckenextruder mit Entgasungsvorrichtung(en) ein Ethylen-Methylacrylat-Copolymer (Lotryl 24 MA07 der Fa. Arkema, DE) für die siegelbare und peelfähige Deckschicht (A) zugeführt. Entsprechend den in unten stehender Tabelle angeführten Verfahrensbedingungen wurde der Rohstoff in dem Zweischneckenextruder aufgeschmolzen.

Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung und anschließende Fixierung eine transparente, dreischichtige Folie mit ABC-Aufbau in einer Gesamtdicke von 30 μm hergestellt. Die Dicke der Deckschicht (A) beträgt 4 μm, die der Deckschicht (C) 2 μm.

Deckschicht (A)

100 Gew.-% Ethylen-Methylacrylat-Copolymer (Lotryl® 24 MA07 der Fa. Arkema, DE) mit einem Anteil von 24 Mol-% Methylacrylat und einem Schmelzeindex von 7 g/10 min

Basisschicht (B)

100 Gew.-% Polyethylenterephthalat mit einem SV-Wert von 800

Deckschicht (C), Mischung aus

85 Gew.-% Polyethylenterephthalat mit einem SV-Wert von 800
15 Gew.-% Masterbatch aus 99 Gew.-% Polyethylenterephthalat (SV-Wert von 800) und 1,0 Gew.-% Sylobloc® 44 H (synthetisches $SiO_2$, Grace, Worms, DE), $d_{50}$ = 2,5 μm

Die Herstellungsbedingungen in den einzelnen Verfahrensschritten waren:

| | | | | |
|---|---|---|---|---|
| Extrusion | Temperaturen | A-Schicht:<br>B-Schicht:<br>C-Schicht: | 280<br>280<br>280 | °C<br>°C<br>°C |
| | Temperatur der Abzugswalze | | 20 | °C |
| Längsstreckung | Aufheiztemperatur | | 70-110 | °C |
| | Strecktemperatur | | 105 | °C |
| | Längsstreckverhältnis | | 3,6 | |
| Querstreckung | Aufheiztemperatur | | 105 | °C |
| | Strecktemperatur | . | 135 | °C |
| | Querstreckverhältnis | | 4,0 | |
| Fixierung | Temperatur | | 230 | °C |
| | Dauer | | 3 | s |

Die gemessenen Mindestsiegeltemperaturen und die Siegelnahtfestigkeiten der Folie gegenüber PS und PP sind in Tabelle 2 eingetragen. Für die Prüfung der Siegelnahtfestigkeit wurde die Folie bei 180 °C gegen PS und PP gesiegelt (Siegeldruck 3 bar, Siegelzeit 0,5 s). Anschließend wurden Streifen des Verbundes aus erfindungsgemäßer Folie und Substrat entsprechend der vorgenannten Messvorschrift auseinandergezogen. Es zeigte sich jeweils das gewünschte Abschälen der Folien vom Substrat.

**Tabelle 2**

| | PS | PP | Einheit |
|---|---|---|---|
| Mindestsiegeltemperaturen | 102 | 104 | °C |
| Siegelnahtfestigkeit | 2,8 | 2,5 | N/15 mm |

**Vergleichsbeispiel 1**

Es wurde das Beispiel 1 aus EP-A-1 475 228 nachgearbeitet. Die Folie zeigte eine peelfähige Siegelung gegen PET, aber nicht gegen PS und PP. Gegen diese Materialien siegelte die Folie nicht.

## Patentansprüche

1. Mehrschichtige, coextrudierte, biaxial orientierte, siegelfähige Polyesterfolie, enthaltend eine Basisschicht (B) und eine heißsiegelbare und gegenüber Polystyrol (PS) und Polypropylen (PP) peelfähige Deckschicht (A), wobei die heißsiegelbare und peelfähige Deckschicht (A) überwiegend aus einer Zusammensetzung aus

    a) 30 bis 100 Gew.-% Ethylen-Acrylsäureester-Copolymer und
    b) 0 bis 70 Gew.-% Polyester besteht und

    wobei das Ethylen-Acrylsäureester-Copolymer 10-40 Mol-% Acrylsäureester enthält.

2. Polyesterfolie nach Anspruch 1, **dadurch gekennzeichnet, dass** die Basisschicht (B) einen thermoplastischen Polyester enthält.

3. Polyesterfolie nach einem oder mehreren der Ansprüche 1 bis 2, **dadurch gekennzeichnet, dass** der Polyester der Basisschicht (B) mindestens 90 Mol-% Ethylenglykol- und Terephthalsäure-Einheiten oder Ethylenglykol- und Naphthalin-2,6-dicarbonsäure-Einheiten enthält.

4. Polyesterfolie nach einem oder mehreren der Ansprüche 1 bis 3, **dadurch gekennzeichnet, dass** als Polyester der Basisschicht (B) Polyethylenterephthalat verwendet wird.

5. Polyesterfolie nach einem oder mehreren der Ansprüche 1 bis 4, **dadurch gekennzeichnet, dass** in der siegelfähigen Deckschicht (A) der Anteil an Ethylen-Acrylsäure-Copolymer 50 bis 96 Gew.-% und der Anteil an Polyester 4 bis 50 Gew.-% beträgt.

6. Polyesterfolie nach einem oder mehreren der Ansprüche 1 bis 5, **dadurch gekennzeichnet, dass** die siegelfähige Deckschicht (A) als Pigment $SiO_2$-Partikel enthält.

7. Polyesterfolie nach einem oder mehreren der Ansprüche 1 bis 6, **dadurch gekennzeichnet, dass** die siegelfähige Deckschicht (A) eine Dicke von 1,0 bis 20 $\mu$m aufweist.

8. Polyesterfolie nach einem oder mehreren der Ansprüche 1 bis 7, **dadurch gekennzeichnet, dass** die Mindestsiegeltemperatur der siegelfähigen Deckschicht (A) gegen PS und PP 150 °C oder weniger beträgt.

9. Verfahren zur Herstellung einer coextrudierten Polyesterfolie nach einem oder mehreren der Ansprüche 1 bis 8, umfassend die Schritte

    a) Herstellen einer mehrschichtigen Folie durch Coextrusion,
    b) biaxiales Strecken der Folie und
    c) Thermofixieren der gestreckten Folie,

    wobei die Polyesterfolie aus einer Basisschicht und mindestens einer Deckschicht (A) besteht und die heißsiegelbare und peelfähige Deckschicht (A) überwiegend aus einer Zusammensetzung aus 30 bis 100 Gew.-% Ethylen-Acrylsäureester-Copolymer und 0 bis 70 Gew.-% Polyester besteht und das Ethylen-Acrylsäureester-Copolymer 10 bis

40 Mol-% Acrylsäureester enthält.

**10.** Verwendung einer Folie nach einem der Ansprüche 1 bis 8 zum Verpacken von Nahrungs- und Genussmitteln, insbesondere zur Verpackung von Milchprodukten in Bechern.

Europäisches Patentamt
European Patent Office
Office européen des brevets

# EUROPÄISCHER RECHERCHENBERICHT

Nummer der Anmeldung
EP 08 01 5292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | EP 1 475 228 A (MITSUBISHI POLYESTER FILM GMBH [DE]) 10. November 2004 (2004-11-10)<br>* Absatz [0001] - Absatz [0005] *<br>* Beispiele 1,2 *<br>----- | 1-10 | INV.<br>B32B27/28<br><br>ADD.<br>B32B27/08<br>B32B27/36<br>B65D77/20 |
| A | EP 0 687 636 A (DU PONT INT [CH]; ENSO GUTZEIT OY [FI])<br>20. Dezember 1995 (1995-12-20)<br>* Spalte 1, Zeile 37 - Spalte 2, Zeile 7 *<br>* Spalte 2, Zeile 23 - Spalte 3, Zeile 8 *<br>* Spalte 4, Zeile 23 - Zeile 33 *<br>----- | 1-4,6-10 | |
| A | DATABASE WPI Week 197405<br>Thomson Scientific, London, GB; AN 1974-07892V<br>XP002503803<br>& JP 48 008328 A (TOYOBO KK)<br>2. Februar 1973 (1973-02-02)<br>* Zusammenfassung *<br>----- | 1-10 | |

RECHERCHIERTE SACHGEBIETE (IPC)

B32B
B65D

Der vorliegende Recherchenbericht wurde für alle Patentansprüche erstellt

| Recherchenort | Abschlußdatum der Recherche | Prüfer |
|---|---|---|
| Den Haag | 21. November 2008 | Lichau, Holger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

1
EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 08 01 5292

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2008

| Im Recherchenbericht angeführtes Patentdokument | Datum der Veröffentlichung | Mitglied(er) der Patentfamilie | Datum der Veröffentlichung |
|---|---|---|---|
| EP 1475228 A | 10-11-2004 | DE 10318097 A1 | 11-11-2004 |
| | | JP 2004322642 A | 18-11-2004 |
| | | KR 20040091572 A | 28-10-2004 |
| | | US 2004213967 A1 | 28-10-2004 |
| EP 0687636 A | 20-12-1995 | AT 161238 T | 15-01-1998 |
| | | DE 69501263 D1 | 29-01-1998 |
| | | DE 69501263 T2 | 09-04-1998 |
| | | DK 764122 T3 | 24-08-1998 |
| | | WO 9534489 A1 | 21-12-1995 |
| | | ES 2112652 T3 | 01-04-1998 |
| | | JP 10501502 T | 10-02-1998 |
| JP 48008328 A | | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10128711 A
- US 4333968 A
- WO 03033258 A
- WO 06055656 A
- EP 1471096 A
- EP 1471097 A
- EP 1475228 A
- EP 1475229 A
- EP 1471094 A
- EP 1471098 A


### In der Beschreibung aufgeführte Nicht-Patentliteratur


- Handbook of Thermoplastic Polyesters. Wiley-VCH, 2002
- Encyclopedia of Polymer Science and Engeneering. John Wiley & Sons, 1988, vol. 12
- **HANSL LOOS.** Farbmessung. Verlag Beruf und Schule, 1989